(19) Europäisches Patentamt
European Patent Office
Office européen des brevets

(11) **EP 3 467 563 A1**

(12) **EUROPÄISCHE PATENTANMELDUNG**

(43) Veröffentlichungstag:
10.04.2019 Patentblatt 2019/15

(51) Int Cl.:
*G02B 21/00* (2006.01)  *G02B 21/36* (2006.01)
*G01N 1/28* (2006.01)

(21) Anmeldenummer: 17195143.7

(22) Anmeldetag: 06.10.2017

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Healthcare GmbH**
**91052 Erlangen (DE)**

(72) Erfinder:
• **ENGEL, Thomas, Dr.**
**73432 Aaalen (DE)**
• **SCHMIDT, Oliver, Dr.**
**91052 Erlangen (DE)**

(54) **MIKROSKOPIERVORRICHTUNG**

(57)  Die Erfindung betrifft eine optische Mikroskopiervorrichtung (1a; 1b) zum Erfassen zellulärer Komponenten einer Probe (P), mit: einer Lichtquelleneinrichtung (2) zum Aussenden eines Lichtstrahls (L); einem in einem Strahlengang des Lichtstrahls (L) anordenbaren Objektträger (3) zum Aufnehmen der Probe (P); einem Objektiv (4), welches im Strahlengang des Lichtstrahls (L) hinter dem Objektträger (3) angeordnet ist; und einem Kamerachip (5) mit Pixeln einer vorgegebenen Pixelgröße, wobei der Kamerachip (5) dazu ausgebildet ist, den Lichtstrahl (L) nach dem Durchgang durch das Objektiv (4) zu detektieren und ein Kamerabild (21, 22, 23) zu erzeugen, wobei eine Sehfeldzahl im Zwischenbild hinter dem Objektiv (4) größer als 25 Millimeter ist.

FIG 2

**Beschreibung**

Die Erfindung betrifft eine optische Mikroskopiervorrichtung zum Erfassen zellulärer Komponenten einer Probe, d. h. insbesondere zum Analysieren von Körperflüssigkeiten, etwa Blut.

Stand der Technik

Zur Untersuchung von Blutproben werden in der Hämatologie Analysesysteme verwendet, welche Mikroskope mit bildgebenden Verfahren kombinieren. So ermöglicht beispielsweise das CellaVision® DM1200 System die Lokalisierung und Untersuchung von Zellen im Blut mittels digitaler Bildanalyse.

Die in derartigen Analysesystemen verwendeten Mikroskope weisen bei einer 100-fachen Vergrößerung Auflösungen auf der Objektebene von etwa 0,1 Mikrometern auf. Bei Verwendung von Kamerachips mit einem Megapixel ist das Gesichtsfeld in Objekt etwa 100 Mikrometer groß. Um Blutproben mit einer Breite im Millimeterbereich zu erfassen, muss daher die Blutprobe in einem mäandernden Scanverfahren mehrfach abgetastet werden, was im Allgemeinen zeitintensiv sein kann.

Aufgrund der großen Anzahl der in Kliniken und Arztpraxen zu untersuchenden Blutproben ist neben der Genauigkeit der Analysesysteme jedoch auch die Geschwindigkeit der Analyse von großer Bedeutung.

Zur Beschleunigung des Verfahrens kann zuerst ein flächenhafter Scan mit einer geringen Auflösung durchgeführt werden, um sogenannte Regions of Interests (RoI) zu ermitteln, d. h. Bereiche der Blutprobe mit bestimmten Komponenten, welche für die Analyse von Relevanz sind. Diese Bereiche werden anschließend mit einer höheren Vergrößerung gezielt angefahren und untersucht.

Auch ein derartiges zweistufiges Verfahren ist immer noch relativ zeitintensiv. Darüber hinaus liegen nur Informationen über die untersuchten ROIs vor, jedoch nicht über die komplette Blutprobe. Falls sich bei weiteren Untersuchungen beispielsweise Auffälligkeiten ergeben, welche eine Analyse bestimmter zuvor nicht untersuchter Komponenten erforderlich machen, muss der Scan erneut durchgeführt werden. Für den Patienten bedeutet dies oftmals das Erfordernis einer erneuten Blutprobe und für das untersuchende Labor einen erneuten Zeitaufwand für die Analyse.

Es besteht somit Bedarf an Mikroskopiervorrichtungen, welche eine schnelle und genaue Untersuchung von größeren Bereichen einer Blutprobe ermöglichen.

Zusammenfassung der Erfindung

Die oben beschriebenen Probleme werden gelöst durch eine optische Mikroskopiervorrichtung mit den Merkmalen des Patentanspruchs 1. Bevorzugte Weiterbildungen sind Gegenstand der abhängigen Patentansprüche.

Die Erfindung stellt demnach eine optische Mikroskopiervorrichtung zum Erfassen zellulärer Komponenten einer Probe bereit. Die Mikroskopiervorrichtung umfasst eine Lichtquelleneinrichtung zum Aussenden eines Lichtstrahls, einen in einem Strahlengang des Lichtstrahls anordenbaren Objektträger zum Aufnehmen der Probe, und ein Objektiv, welches im Strahlengang des Lichtstrahls hinter dem Objektträger angeordnet ist. Ein Kamerachip ist dazu ausgebildet, den Lichtstrahl nach dem Durchgang durch das Objektiv zu detektieren und ein Kamerabild zu erzeugen. Die Sehfeldzahl im Zwischenbild hinter dem Objektiv ist größer als 25 Millimeter.

Die Unterscheidbarkeit benachbarter leuchtender Strukturen kann mittels verschiedener Kriterien angegeben werden. Falls der Abstand der Strukturen etwa der Halbwertsbreite der Intensitätsverteilung entspricht, sind die Strukturen nicht unterscheidbar. Mit zunehmendem Abstand ergibt sich ein nachweisbarer Helligkeitsabfall zwischen den Maxima und die Strukturen sind nach dem sogenannten Sparrow-Kriterium unterscheidbar. Falls schließlich das Intensitätsmaximum der ersten Struktur im Intensitätsminimum der zweiten Struktur liegt, erfüllen die Strukturen das sogenannte Rayleigh-Kriterium.

Während das menschliche Auge Veränderungen der Helligkeit logarithmisch wahrnimmt, führen diese Veränderungen bei Kamerachips zu einer linearen Änderung des Signals. Aus diesem Grund sind benachbarte Strukturen für Kamerachips im Allgemeinen bereits unterscheidbar, falls sie das Sparrow-Kriterium erfüllen, während das menschliche Auge typischerweise einen größeren Abstand der Strukturen erfordert, diese also das Rayleigh-Kriterium erfüllen müssen.

Das menschliche Auge ist in der Lage Objekte zu unterscheiden, welche etwa 0,2 mm bis 0,3 mm voneinander getrennt sind. Da Mikroskope typischerweise Okulare aufweisen, um die Probe mit dem Auge betrachten zu können, werden die Objektive auch auf das Auflösungsvermögen des menschlichen Auges angepasst. Okulare haben typischerweise Vergrößerungen von 10x, so dass das Bild ohne die Okularvergrößerung eine Auflösung von 20 $\mu$m bis 30 $\mu$m bereitstellt.

Moderne Kamerachips weisen Pixelgrößen typischerweise unter 7 Mikrometern und bei Kamerachips mit mehreren 10 Megapixeln Auflösung typischerweise unter 5 oder 3 Mikrometern und bei sehr kleinen Pixelgrößen im Bereich von 1 Mikrometern auf. Dadurch kann die optische Vergrößerung des Objektivs wesentlich geringer gehalten werden.

Damit der Benutzer in der Lage ist, die Probe direkt zu betrachten, ist neben dem Okular auch eine Tubuslinse erforderlich. Typische Fokuslängen der Tubuslinsen liegen im Bereich von etwa 164 bis 200 Millimetern. Zusammen mit der typischen Länge des Objektivs von mindestens 45 Millimetern beträgt die Baulänge, d. h. der Abstand zwischen der Objektebene und der Bildebene, weit über 200 Millimeter, da zwischen Objektiv und Tubuslinse typischerweise ein Abstand von mindestens 50 mm besteht, um weitere optische Elemente wie beispielsweise Filter, Strahlteiler, Polarisatoren, doppelbrechende Strahlvereiniger für differentiellen Interferenzkontrast oder Strahleinkopplungen in den Strahlengang einzubringen.

Der Erfindung liegt nun die Erkenntnis zugrunde, dass durch Verzicht auf eine bisher vorgenommene Anpassung auf die Fähigkeiten des menschlichen Auges die Ausschöpfung der Kapazitäten moderner Kamerachips erst möglich wird.

Die Mikroskopiervorrichtung wird daher derart ausgestaltet, dass die Sehfeldzahl im Zwischenbild hinter dem Objektiv größer als 25 Millimeter ist. Gemäß weiteren Ausführungsformen kann die Sehfeldzahl größer als 30 Millimeter oder sogar größer als 35 Millimeter, 40 Millimeter oder 50 Millimeter sein.

Die Sehfeldzahl bezeichnet hierbei die Größe bzw. den Durchmesser des Zwischenbildes im optischen System der Mikroskopiervorrichtung, wobei das Zwischenbild vom Objektiv bzw. gegebenenfalls im Zusammenwirken mit einer Tubuslinse der Mikroskopiervorrichtung aufgrund der Objektivvergrößerung erzeugt wird. Insbesondere ist hierin keine Nachvergrößerung durch Projektive oder Kameratuben umfasst.

Gemäß einer weiteren Ausführungsform der Mikroskopiervorrichtung ist der Kamerachip dazu ausgebildet, das Zwischenbild hinter dem Objektiv direkt zu erfassen.

Gemäß einer weiteren bevorzugten Ausführungsform der Mikroskopiervorrichtung ist eine Gesamtvergrößerung der Mikroskopiervorrichtung gegeben durch einen Quotienten einer Abtastung in der Objektebene und der Pixelgröße der Pixel des Kamerachips. Unter Abtastung ist die effektive Pixelgröße in der Objektebene zu verstehen. Weiter ist die Auflösung der Mikroskopiervorrichtung mindestens doppelt so groß wie die Abtastung. Allgemeiner ist die Auflösung der Mikroskopiervorrichtung gleich dem Produkt eines Abtastfaktors und der Abtastung. Der Abtastfaktor ist nach dem Shannon-Nyquist-Theorem größer als 2 und bevorzugt größer als 2,5.

Gemäß einer weiteren Ausführungsform der Mikroskopiervorrichtung ist eine Gesamtvergrößerung der Mikroskopiervorrichtung mindestens doppelt so groß wie der Quotient aus Pixelgröße und Auflösung der Mikroskopiervorrichtung. Allgemeiner ist die Gesamtvergrößerung der Mikroskopiervorrichtung gleich dem Abtastfaktor, multipliziert mit dem Quotienten aus Pixelgröße und Auflösung der Mikroskopiervorrichtung, wobei der Abtastfaktor mindestens 2, bevorzugt mindestens 2,5 beträgt.

Ferner ist bei einer spezialisierten Mikroskopiervorrichtung eine Tubuslinse im Gegensatz zu den bekannten Mikroskopen nicht mehr zwingend erforderlich oder kann zumindest funktional direkt in das Objektiv integriert werden. Dadurch kann die Mikroskopiervorrichtung vorzugsweise derart ausgestaltet sein, dass ein geringer Abstand zwischen dem Objektträger und dem Kamerachip von weniger als 200 Millimetern resultiert. Der Abstand zwischen Objektträger und Kamerachip kann auch kleiner als 160 Millimeter sein, bevorzugt kleiner als 120 Millimeter, und besonders bevorzugt sogar kleiner als 100 Millimeter. Die Mikroskopiervorrichtung zeichnet sich somit durch einen sehr kompakten Aufbau aus. Die geringere benötigte Vergrößerung ist somit auch ein Schlüsselfaktor für die kompakte Bauweise. Durch den kompakten und robusten Aufbau ist auch eine einfachere Korrektur von Abbildungsfehlern sowie eine geringere Vergrößerung möglich.

Gemäß einer weiteren Ausführungsform ist die Gesamtvergrößerung der optischen Mikroskopiervorrichtung geteilt durch die numerische Apertur des Objektivs für Licht im sichtbaren Spektralbereich, z.B. für die mittlere Wellenlänge von 500 Nanometer, kleiner oder gleich dem Zehnfachen der Pixelgröße der Pixel des Kamerachips. Die spezifische Auslegung der Gesamtvergrößerung der optischen Mikroskopiervorrichtung wird somit an die optischen Eigenschaften der Kamerachips angepasst. Dies wird im Folgenden näher erläutert.

Die minimale Auflösung $\delta$ ist proportional zum Quotienten der Wellenlänge $\lambda$ des verwendeten Lichts und der numerischen Apertur NA:

$$\delta = k \cdot \lambda / NA$$

Die Proportionalitätskonstante k hängt vom verwendeten Kriterium ab und beträgt k = 0,5 für das Sparrow-Kriterium und k = 0,61 für das Rayleigh-Kriterium.

Die Auflösung $\delta\_O$ auf Objektseite ist somit durch Wellenlänge $\lambda$ des verwendeten Lichts und die numerische Apertur $NA\_O$ des Objektivs bestimmt:

$$\delta\_O = k\_O \cdot \lambda / NA\_O$$

Auf Bildseite, d. h. im Kamerachip, ist die Auflösung $\delta\_I$ durch die numerische Apertur NA_I des Kamerachips bestimmt, welche eine Funktion f der Pixelgröße d_pix und der Abtastrate ist:

$$\delta\_I = k\_I \cdot \lambda / NA\_I$$

Die Auflösung $\delta\_I$ ist gleich dem Produkt einer Abtastrate S und der Pixelgröße d_pix,

$$\delta\_I = S \cdot d\_pix.$$

Die minimale Abtastrate S ist durch das Nyquist-Shannon-Theorem vorgegeben und beträgt S = 2,5. Die minimale numerische Apertur NA_I des Kamerachips hängt somit von der Pixelgröße d_pix ab:

$$NA\_I = k\_I \cdot \lambda / (S \cdot d\_pix).$$

Für eine typische Wellenlänge $\lambda$ von 500 Nanometern ergibt sich:

$$NA\_I = k\_I \cdot Mikrometer / (5 \cdot d\_pix).$$

Die Gesamtvergrößerung V der optischen Mikroskopiervorrichtung entspricht dem Quotienten der numerischen Apertur NA_O auf Objektseite und der numerischen Apertur NA_I auf Bildseite:

$$V = NA\_O / NA\_I = NA\_O \cdot 5 \cdot d\_pix \ [Mikrometer] / k\_I.$$

Für die Proportionalitätskonstante k_I auf der Bildseite wird nun der Wert 0,5 gemäß dem Sparrow-Kriterium gewählt, da die Mikroskopiervorrichtung auf die Verwendung des Kamerachips eingestellt wird. Es ergibt sich:

$$V = NA\_O \cdot 10 \cdot d\_pix \ [Mikrometer].$$

Die minimale Vergrößerung bei einer Wellenlänge von 500 nm ist somit unter Beachtung des Nyquist-Shannon-Theorems gegeben durch das Zehnfache der Pixelgröße in Mikrometern, multipliziert mit der numerischen Apertur des Objektivs. Die Vergrößerung geteilt durch die numerische Apertur des Objektivs kann derart gewählt werden, dass sie ungefähr bzw. mindestens so groß ist wie das Zehnfache der Pixelgröße in Mikrometern.

Weiter ergibt sich:

$$1/NA\_I = V/NA\_O = 10 \cdot d\_pix \ [Mikrometer]$$

Beispielsweise ergeben sich für eine numerische Apertur des Objektivs von NA_O = 1,3 bei Verwendung einer Immersionsflüssigkeit für verschiedene Pixelgrößen d_pix von 2 Mikrometern, 3 Mikrometern und 5 Mikrometern somit für eine Wellenlänge von 500 nm folgende numerischen Aperturen NA_I auf Bildseite bzw. folgende Vergrößerungen V:

$$d\_pix = 2\ \mu m: \quad NA\_I = 1/20, \quad V = 26,$$
$$d\_pix = 3\ \mu m: \quad NA\_I = 1/30, \quad V = 39,$$
$$d\_pix = 5\ \mu m: \quad NA\_I = 1/50, \quad V = 65.$$

Die Pixelgröße d_pix, O auf Objektseite ist somit gegeben durch:

$$d\_pix,O = d\_pix/V = 2\ \mu m/26 = 3\ \mu m/39 = 5\ \mu m/65 = 77\ nm.$$

Die entsprechende Auflösung δ_O beträgt:

$$\delta\_O = S \cdot d\_pix,O = 192 \text{ nm.}$$

Die Tiefenschärfe DoF_O auf der Objektseite ist gegeben durch:

$$DoF\_O = \pm \lambda/NA\_O\verb|^|2.$$

Für eine numerische Apertur NA_O von 1,3 und eine Wellenlänge λ von 500 Nanometern ergibt sich eine Tiefenschärfe auf Objektseite von DoF_O = ± 0,3 Mikrometern. Vorzugsweise wird auf der Bildseite der Fokus mittels einer Präzisionssteuerung eingestellt.

Die Tiefenschärfe auf der Bildseite ist gegeben durch:

$$DoF\_I = \pm \lambda/NA\_I\verb|^|2.$$

Für eine numerische Apertur NA_I = 1,3/V auf der Bildebene bzw. Bildseite und eine Wellenlänge λ von 500 Nanometern ergibt sich eine Tiefenschärfe auf Bildseite für die verschiedenen Vergrößerungen von:

| | |
|---|---|
| V = 12: | DoF_I = ±42 µm |
| V = 16: | DoF_I = ±76 µm |
| V = 20: | DoF_I = ±118 µm |
| V = 26: | DoF_I = ±200 µm |

In einem weiteren Beispiel beträgt die numerische Apertur des Objektivs NA_O = 0,55. Für verschiedene Pixelgrößen d_pix von 2 Mikrometern, 3 Mikrometern und 5 Mikrometern ergeben sich folgende numerischen Aperturen NA_I auf Bildseite bzw. Vergrößerungen V:

| | | |
|---|---|---|
| d_pix = 2 µm: | NA_I = 1/20, | V = 11,0, |
| d_pix = 3 µm: | NA_I = 1/30, | V = 16,6, |
| d_pix = 5 µm: | NA_I = 1/50, | V = 27,5. |

Die Pixelgröße d_pix, O auf Objektseite ist somit gegeben durch:

$$d\_pix,O = d\_pix/V = 2 \text{ µm}/11 = 3 \text{ µm}/16,6 = 5 \text{ µm}/27,5 = 182 \text{ nm.}$$

Die entsprechende Auflösung δ_O beträgt:

$$\delta\_O = S \cdot d\_pix,O = 455 \text{ nm.}$$

Für eine numerische Apertur NA_O von 0,55 und eine Wellenlänge λ von 500 Nanometern ergibt sich eine Tiefenschärfe auf Objektseite von DoF_O = ±1,65 Mikrometern.

Für eine numerische Apertur NA_I = 0,55/V auf der Bildebene und eine Wellenlänge λ von 500 Nanometern ergibt sich eine Tiefenschärfe auf der Bildseite für die verschiedenen Vergrößerungen von:

| | |
|---|---|
| V = 11: | DoF_I = ±200 µm |
| V = 16,6: | DoF_I = ±455 µm |
| V = 27,5: | DoF_I = ±1250 µm |

Gemäß einer bevorzugten Weiterbildung ist eine Baulänge, d. h. ein Abstand zwischen dem Objektträger und dem Kamerachip, kleiner als 200 Millimeter.

Gemäß einer bevorzugten Weiterbildung der Mikroskopiervorrichtung ist eine numerische Apertur des Objektivs in Luft größer als 0,5. Die numerische Apertur kann beispielsweise 0,55 betragen. Bevorzugt ist die numerische Apertur größer als 0,8, und besonders bevorzugt größer als 0,89. Die zur Lichtbrechung verwendeten Linsen des Objektivs weisen einen größeren Durchmesser als bei kleineren Aperturen auf, was durch den kompakteren Aufbau und die geringere Baulänge, die durch die größere bildseitige Apertur möglich wird, kompensiert wird. Durch die Beschränkung der Gesamtvergrößerung ergibt sich bei der vorgegebenen numerischen Apertur des Objektivs eine entsprechende höhere numerische Apertur auf der Seite des Kamerachips, wodurch auch die Baulänge minimiert wird.

Gemäß einer bevorzugten Weiterbildung der Mikroskopiervorrichtung ist eine Vergrößerung des Objektivs kleiner oder gleich 30 und bevorzugt kleiner oder gleich 20 und bevorzugt kleiner oder gleich 10. Die geringe Vergrößerung ermöglicht es, einen großen Ausschnitt der Probe abzubilden. Aufgrund der angepassten numerischen Aperturen des Objektivs und des Kamerachips ist gleichwohl eine Abbildung bzw. Abtastung der Probe mit hinreichend großer Auflösung möglich.

Gemäß einer bevorzugten Ausführungsform der Mikroskopiervorrichtung ist die Auflösung kleiner als ein Mikrometer, bevorzugt kleiner als 0,5 Mikrometer und besonders bevorzugt kleiner als 0,15 Mikrometer. Dadurch ist eine Analyse bestimmter Komponenten in der Probe, insbesondere von Zellstrukturen in Blutproben möglich.

Gemäß einer bevorzugten Weiterbildung der Mikroskopiervorrichtung weist der Kamerachip eine Pixelgröße von kleiner oder gleich 7,5 Mikrometern auf, und bevorzugt von kleiner oder gleich 5 Mikrometern. Besonders bevorzugt ist die Pixelgröße kleiner oder gleich 3 Mikrometer, 2 Mikrometer oder sogar 1 Mikrometer. Durch die kleinen Pixelgrößen können auch bei geringerer Vergrößerung ausreichende Auflösungen erzielt werden. Die geringere Gesamtvergrößerung bedeutet optische Systeme mit weniger und einfacher ausgestalteten Linsen, welche deutlich kompakter und preisgünstiger bereitgestellt werden können.

Gemäß einer bevorzugten Weiterbildung der Mikroskopiervorrichtung weist der Kamerachip mindestens 30 Megapixel und bevorzugt mindestens 50 Megapixel auf. Kamerachips mit einer derart hohen Anzahl von Pixeln sind mittlerweile vergleichsweise kostengünstig verfügbar. Durch die große Pixelanzahl kann ein größeres Gesichtsfeld abgedeckt werden. Für einen Kamerachip mit 50 Megapixeln im typischen 4:3 Format der Kameras beträgt die Breite des abgebildeten Bereichs der Probe bei einer Auflösung von 0,1 Mikrometern bereits 0,9 Millimeter und bei einer Auflösung von 0,4 Mikrometern sogar 3,5 Millimeter. Dadurch kann vorzugsweise die Probe in ihrer gesamten Breite erfasst und untersucht werden.

Beispielsweise kann die numerische Apertur des Objektivs mit Immersion 1,2 oder sogar bis zu 1,4 betragen, bei einer 40-fachen Vergrößerung und einer Pixelgröße von 4 Mikrometern. Dadurch kann eine Objektauflösung von 0,1 Mikrometern erreicht werden. Bei einer Objektauflösung von 0,4 Mikrometern ist sogar eine zehnfache Vergrößerung ausreichend.

Gemäß einer bevorzugten Weiterbildung der Mikroskopiervorrichtung wird zumindest auf der Objektseite eine telezentrische Abbildung bereitgestellt. Dadurch können konstante bzw. gleichbleibende Abbildungseigenschaften über das gesamte Gesichtsfeld erzielt werden. Dies ist insbesondere bei den vorzugsweise verwendeten großen Gesichtsfeldern von Vorteil.

Gemäß einer bevorzugten Weiterbildung der Mikroskopiervorrichtung weist diese eine Immersionsflüssigkeitseinrichtung auf, welche eine Immersionsflüssigkeit, etwa Öl oder Wasser, zwischen den Objektträger und das Objektiv einbringt bzw. die Immersionsflüssigkeit absaugt.

Die Immersionsflüssigkeit kann mittels einer Düse bzw. eines Rohrs eingebracht werden. Die Immersionsflüssigkeit kann jedoch auch mittels einer diffusen Struktur im Gehäuse des Objektivs eingebracht werden, sodass die Immersionsflüssigkeit im gesamten großen Gesichtsfeld des Objektivs gleichmäßig und blasenfrei aufgebracht wird. Die Dosierung bzw. das Einbringen der Immersionsflüssigkeit kann bevorzugt auf derjenigen Seite des Objektivs erfolgen, welche in Scanrichtung der Messung vor der optischen Achse der Optik liegt. Durch Verwendung einer Immersion wird die numerische Apertur des Objektivs erhöht, wobei die numerische Apertur zum Brechungsindex der Immersion proportional ist. Dadurch wird das Auflösungsvermögen zusätzlich vergrößert. Bei einer Auflösung von Strukturen größer als 0,4 Mikrometer kann im Allgemeinen jedoch auch auf das Einbringen der Immersionsflüssigkeit verzichtet werden.

Ferner kann die Immersionsflüssigkeitseinrichtung auch dazu ausgebildet sein, auf der Beleuchtungsseite der Probe an der Kondensorvorrichtung der Mikroskopiervorrichtung eine Immersionsflüssigkeit einzubringen und/oder abzusaugen.

Gemäß einer bevorzugten Weiterbildung der Mikroskopiervorrichtung weist das Objektiv asphärische optische Elemente und/oder computergenerierte Hologramme und/oder diffraktive optische Elemente zur optischen Abbildung und/oder Optimierung der Abbildungsgüte auf. Derartige optische Elemente sind insbesondere bei den für größere numerische Aperturen erforderlichen größeren Linsen des Objektivs vorteilhaft.

Gemäß einer bevorzugten Weiterbildung weist die Mikroskopiervorrichtung eine Verfahrvorrichtung auf, welche den Objektträger entlang einer Bewegungsachse linear verfährt. Der Kamerachip ist dazu ausgebildet, während des Verfahrens des Objektträgers eine Vielzahl von Kamerabildern zu generieren. Eine Auswerteeinrichtung kombiniert die generierten Kamerabilder und erzeugt ein Gesamtbild eines streifenförmigen Bereichs der zu untersuchenden Probe.

Der streifenförmige Bereich weist eine Breite von vorzugsweise mindestens einem halben Millimeter, weiter bevorzugt von mindestens einem Millimeter und besonders bevorzugt mindestens zwei Millimetern auf. Dies kann bei vorgegebener numerischer Apertur durch geeignete Wahl der Pixelgröße, Pixelzahl und Vergrößerung erreicht werden. Die Mikroskopiervorrichtung ist dadurch in der Lage, eine streifenförmige aufgetragene Probe durch lediglich eindimensionales Verfahren des Objektträgers vollständig zu erfassen. Die Kamerabilder werden dazu lediglich an zwei gegenüberliegenden Seiten mit den benachbarten Kamerabildern verbunden. Der benötigte Überlapp der Kamerabilder ist geringer als bei einem mäandernden Verfahren, da kein zusätzlicher Überlapp mit seitlichen Bereichen benötigt wird.

Die Verfahrvorrichtung verfährt den Objektträger somit vorzugsweise lediglich in einer Dimension und nicht in zwei Dimensionen und kann dadurch deutlich kompakter und kostengünstiger ausgestaltet werden. Durch das lediglich eindimensionale Abrastern wird darüber hinaus die Zeit, welche zum Erfassen der gesamten Probe benötigt wird, deutlich reduziert.

Da die Probe in ihrer gesamten Ausmessung erfasst wird, stehen unmittelbar hoch aufgelöste Daten der gesamten Probe zur Verfügung. Durch Speichern dieser Daten können diese zu einem späteren Zeitpunkt erneut ausgewertet werden, etwa zur Analyse weiterer Komponenten.

Gemäß einer bevorzugten Weiterbildung weist die Mikroskopiervorrichtung eine Aufbringeinrichtung auf, welche die zu untersuchende Probe auf den Objektträger aufbringt, wobei die Verfahrvorrichtung dazu ausgebildet ist, den Objektträger mit der aufgebrachten Probe in den Strahlengang des Lichtstrahls einzubringen. Ein dünnes Aufbringen hat gegenüber einem im Stand der Technik verbreiteten Breitstreichen mittels einer Klinge den Vorteil einer homogeneren Verteilung der Probe und einer gleichmäßigen Ausbringung z.B. der unterschiedlichen Blutzellen. Dabei entfällt die sogenannte Fahne mit einer Ansammlung von größeren Zellen im Bereich des Endes eines Ausstrichs, der beispielsweise mit Klinge ausgeführt wird.

Gemäß einer bevorzugten Weiterbildung der Mikroskopiervorrichtung weist diese eine Einfärbeeinrichtung auf, welche die auf den Objektträger aufgebrachte Probe vor dem Einbringen in den Strahlengang des Lichtstrahls einfärbt. Dadurch, dass lediglich ein eindimensionaler Transport der Probe nötig ist, kann diese an einer ersten Position aufgebracht werden, an einer zweiten Position chemisch eingefärbt werden, an einer dritten Position untersucht werden und an einer vierten Position entfernt werden. Die Proben können somit fließbandartig verarbeitet werden, sodass eine große Anzahl von Proben in kurzer Zeit analysiert werden können.

Gemäß einer bevorzugten Weiterbildung der Mikroskopiervorrichtung sind im Strahlengang optische Elemente eingebracht, sodass die Mikroskopiervorrichtung zur Differentialinterferenzkontrast-Mikroskopie (DIC-Mikroskopie) ausgebildet ist. Hierzu kann beispielsweise ein linearer oder zirkularer Polarisationsfilter hinter der Lichtquelleneinrichtung ausgebildet sein, welcher das ausgesendete Licht polarisiert. Die Polarisationsrichtung steht dann z.B. unter 45 Grad zu den Kantenrichtungen des Objektträgers. Z.B. spaltet ein Wollaston-Prisma den senkrecht einfachen Strahl in zwei senkrecht zueinander polarisierte Teilstrahlen auf. Ein unter dem Objektträger angeordneter Kondensor fokussiert den Lichtstrahl auf die Probe. Nach dem Durchgang durch das Objektiv werden die beiden Teilstrahlen durch ein weiteres Wollaston-Prisma wieder zusammengeführt. Direkt bzw. ohne Wirkung auf die Polarisation transmittierte Anteile werden durch einen zweiten Polarisationsfilter entfernt. Durch dieses Verfahren kann eine hohe Kontrastierung von Objekten erreicht werden, die auf die Polarisation des Lichtes einwirken. Insbesondere kann dadurch vorzugsweise für einige Untersuchungen darauf verzichtet werden, die Probe vor der Messung chemisch einzufärben, mit den oben beschriebenen Vorteilen.

Gemäß einer bevorzugten Weiterbildung ist die Mikroskopiervorrichtung zur Phasenmikroskopie ausgebildet.

Gemäß einer bevorzugten Weiterbildung der Mikroskopiervorrichtung weist diese einen Polarisator auf, welcher den Lichtstrahl vor dem Durchgang durch den Objektträger entlang einer ersten Polarisationsebene polarisiert. Im Strahlengang ist hinter dem Objektiv ein Analysator angeordnet, welcher den Lichtstrahl entlang einer zweiten Polarisationsebene polarisiert. Die Optik kann beispielsweise polarisationserhaltend ausgeführt sein. Der Kamerachip kann beispielsweise in Kombination mit einem geeigneten Filter derart ausgebildet sein, dass zwischen zwei ausgezeichneten Polarisationsrichtungen umgeschaltet werden kann. Die Umschaltung kann mittels elektrooptischer Elemente oder mittels Flüssigkeitskristalle enthaltender Elemente erfolgen. Die Polarisation des Lichts kann auch zur Ermittlung weiterer Information über die untersuchte Probe ermittelt werden. So tritt eine Polarisationswirkung beispielsweise bei geneigten Oberflächen auf, insbesondere bei sphärischen weißen Blutkörperchen, elliptischen Blutplättchen oder bikonkaven roten Blutkörperchen. Weiter nehmen die roten Blutkörperchen in ihrem etwa 90tägigen Lebenszyklus Blutzuckerstoffe auf, welche eine optische Aktivität zeigen. Diese Polarisationswirkungen können zu einer erweiterten Blutanalyse eingesetzt werden.

Die bevorzugte geringe Vergrößerung hat den weiteren Vorteil, dass die zusätzlichen optischen Einrichtungen für die Differentialinterferenzkontrast-Mikroskopie bzw. Polarisations-Mikroskopie kompakter ausgebildet werden können, was aufgrund der hohen Kosten einiger dieser Elemente von Vorteil ist.

Gemäß einer bevorzugten Weiterbildung der Mikroskopiervorrichtung ist die Auswerteeinrichtung dazu ausgebildet, anhand des erzeugten Gesamtbildes unter Verwendung von Bildverarbeitungsverfahren Strukturen in der zu untersuchenden Probe zu erkennen. Bestimmte Komponenten des Blutes, beispielsweise Zellen, Zellcluster oder Ablagerungen im Blut können durch Bildverarbeitungsverfahren erkannt und automatisch ausgewertet werden. Zur Detektion können Verfahren des Computerlernens zum Einsatz kommen, beispielsweise Hauptkomponentenanalysen (PCA) oder neuronale Netze, etwa Convolutional Neural Networks (CNNs) oder deep Convolutional Neural Networks (dCNNs). Derartige lernende Verfahren können zur Klassifizierung der gefundenen Zellen herangezogen werden. Dadurch können zur Unterstützung des Arztes die Zellen gezählt, Anomalien detektiert und Krankheitsbilder bereits befundet werden. Die Klassifizierung der Bildinhalte und die Befundung können auch multimodal, also durch wiederholte oder parallele Messung der Probe mit unterschiedlichen optischen Messmodalitäten, durchgeführt werden.

Gemäß einer bevorzugten Weiterbildung der Mikroskopiervorrichtung ist die Auswerteeinrichtung dazu ausgebildet, die erkannten Strukturen digital einzufärben und ein entsprechend eingefärbtes Gesamtbild auszugeben.

Gemäß einer Weiterbildung der Mikroskopiervorrichtung weist diese eine Ausrichteeinrichtung auf, welche dazu ausgebildet ist, den Objektträger relativ zu einer optischen Achse und/oder einem Tiefenschärfebereich des Objektivs auszurichten. Bei einer großen numerischen Apertur ist die Tiefenschärfe relativ gering und liegt im Bereich der Wellenlänge des Lichts, das heißt etwa im Bereich eines halben Mikrometers. Daher ist eine genaue Ausrichtung des Objektträgers vorteilhaft, um eine ausreichende Fokussierung zu bewerkstelligen. Die Ausrichteeinrichtung kann mechanisch manuell bedient werden oder automatisch aktiv mittels DC-Motoren, Schrittmotoren oder Piezoantrieben. Die Mikroskopiervorrichtung weist hierzu vorzugsweise eine Sensoreinrichtung auf, welche dazu ausgebildet ist, die Lage des Objektträgers relativ zur optischen Achse und des Arbeitsbereichs des Objektivs zu erkennen, wobei die Auswerteeinrichtung den Objektträger unter Verwendung der erkannten Lage des Objektträgers ausrichtet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:

Fig. 1     ein schematisches Blockschaltbild einer optischen Mikroskopiervorrichtung gemäß einer Ausführungsform der Erfindung;

Figur 2     eine schematische Querschnittsansicht einer Mikroskopiervorrichtung gemäß einer Ausführungsform der Erfindung;

Figur 3     eine schematische Schrägansicht eines ausrichtbaren Objektträgers; und

Figur 4     eine schematische Draufsicht auf eine zu analysierende Probe.

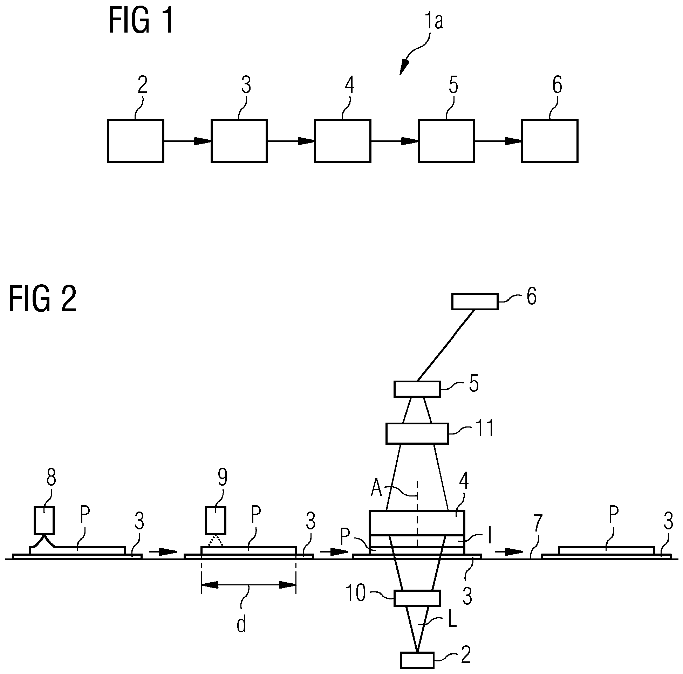

In Figur 1 ist ein schematisches Blockschaltbild einer optischen Mikroskopiervorrichtung 1a gemäß einer Ausführungsform der Erfindung illustriert.

Die Mikroskopiervorrichtung 1a umfasst eine Lichtquelleneinrichtung 2, welche eine Lichtstrahl aussendet. Das Spektrum des ausgesendeten Lichtstrahls liegt vorzugsweise im sichtbaren oder im nahinfraroten Bereich. Beispielsweise kann die Wellenlänge des ausgesendeten Lichtstrahls im Bereich von 500 Nanometern liegen. Im Strahlengang des Lichtstrahls ist ein Objektträger 3 angeordnet, mit einer zu analysierenden biologischen Probe, etwa einer Blutprobe.

Vorzugsweise befindet sich zwischen der Lichtquelleneinrichtung 2 und dem Objektträger 3 ein Kondensor zum Fokussieren des Lichtstrahls.

Im Strahlengang des Lichtstrahls hinter dem Objektträger 3 ist ein Objektiv 4 ausgebildet. Das Objektiv 4 ist durch eine Vergrößerung, eine numerische Apertur NA_O und eine sehfeldzahl gekennzeichnet. Die numerische Apertur NA_O des Objektivs 4 ist größer als 0,5, bevorzugt größer als 0,8 und besonders bevorzugt größer als 0,9. Ferner hat das Objektiv eine Sehfeldzahl von mehr als 25 mm, bevorzugt mehr als 30 mm und besonders bevorzugt mehr als 40 mm. Das Objektiv kann somit einen großen Bereich des Objektträgers 3 mit hoher Auflösung erfassen. Die Vergrößerung des Objektivs 4 ist vorzugsweise kleiner oder gleich 20 und besonders bevorzugt kleiner oder gleich 10. Die Vergrößerung ist somit relativ gering, um einen großen Bereich der Probe abbilden zu können. Bevorzugt sind die Vergrößerung, die Sehfeldzahl und die numerische Apertur des Objektivs 4 derart gewählt, dass ein Gesichtsfeld des Objektivs mindestens eine Breite von einem halben Millimeter und vorzugsweise von mindestens einem und besonders bevorzugt mindestens zwei Millimetern aufweist.

Die Mikroskopiervorrichtung 1 kann einen Revolver-Mechanismus aufweisen, sodass mehrere Objektive 4 abwechselnd in den Strahlengang des Lichtstrahls L eingebracht werden können.

Im Strahlengang des Lichtstrahls L hinter dem Objektiv 4 ist ein Kamerachip 5 angeordnet, welcher den Lichtstrahl L nach dem Durchgang durch die auf dem Objektträger 3 aufgebrachte Probe und nach dem Durchgang durch das Objektiv 4 erfasst. Der Kamerachip 5 ist durch eine Pixelanzahl und eine Pixelgröße gekennzeichnet. Vorzugsweise umfasst der Kamerachip mindestens 30 und besonders bevorzugt mindestens 50 Megapixel. Die Pixelgröße ist kleiner oder gleich 7,5 Mikrometer bevorzugt kleiner oder gleich 5 Mikrometer und besonders bevorzugt kleiner oder gleich 3 Mikrometer. Das mittels des Kamerachips erfasste Bild wird an eine Auswerteeinrichtung 6 übertragen, welche das Bild weiter auswertet. Die Auswerteeinrichtung 6 kann insbesondere mehrere nacheinander erfasste Kamerabilder, welche verschiedene Ausschnitte der Probe abbilden, zu einem Gesamtbild kombinieren. Weiter kann die Auswerteeinrichtung 6 eine automatische Bildauswertung durchführen, um bestimmte Strukturen in dem erfassten Bild bzw. Gesamtbild zu erkennen.

Die Auswerteeinrichtung 6 ist als Recheneinrichtung mit mindestens einem Mikroprozessor ausgebildet. Die Auswerteeinrichtung 6 umfasst weiter einen physikalischen Speicher, um die einzelnen Bilder und/oder das Gesamtbild zu speichern. Dadurch ist eine erneute Auswertung und Analyse von Strukturen anhand des Gesamtbilds zu einem späteren Zeitpunkt möglich.

Die Gesamtvergrößerung V der optischen Mikroskopiervorrichtung 1a geteilt durch die numerische Apertur NA_O des Objektivs ist kleiner oder gleich dem Zehnfachen der in Mikrometern gemessenen Pixelgröße der Pixel des Kamerachips.

In Figur 2 ist eine schematische Querschnittsansicht einer optischen Mikroskopiervorrichtung 1b gemäß einer weiteren Ausführungsform illustriert. Der Objektträger 3 kann mittels einer Verfahrvorrichtung 7 der Mikroskopiervorrichtung 1 in den Strahlengang des Lichtstrahls L eingebracht werden. Zur Vorbereitung der Probe P sind mehrere schematisch eingezeichnete Stationen vorgesehen. So wird die Probe mittels einer Aufbringeinrichtung 8 auf den Probenträger 3 aufgebracht. Die Breite der aufgebrachten Probe ist hierbei vorzugsweise kleiner oder gleich der Breite des Gesichtsfelds des Objektivs 4.

Mittels einer optionalen Einfärbeeinrichtung 9 wird die auf den Objektträger 3 aufgebrachte Probe eingefärbt. Anschließend bringt die Verfahrvorrichtung 7 den Objektträger 3 in den Strahlengang des Lichtstrahls L ein. Mittels der oben beschriebenen Lichtquelleneinrichtung 2, dem Objektiv 4 und dem Kamerachip 5 wird wie oben beschrieben ein Kamerabild erzeugt und an eine Auswerteeinrichtung 6 übermittelt.

Zwischen der Lichtquelleneinrichtung 2 und dem in den Strahlengang des Lichtstrahls L eingebrachten Objektträger 3 können weitere schematisch eingezeichnete erste optische Elemente 10 eingebracht sein, welche einen Kondensor und zusätzliche optionale Linsen, Filter oder Polarisatoren umfassen können. Ebenfalls können zwischen dem Objektiv 4 und dem Kamerachip 5 zweite optische Einrichtungen 11 eingebracht sein, beispielsweise Linsen, Filter oder Polarisatoren. Die zweiten optischen Einrichtungen 11 können jedoch auch direkt in das Objektiv 4 integriert sein. Mittels der ersten und zweiten optischen Einrichtungen 10, 11 kann die optische Mikroskopiervorrichtung 1b zur Differenzialinterferenzkontrast-Mikroskopie oder zu einer Polarisations-Mikroskopie ausgebildet sein.

Weiter ist vorzugsweise zwischen dem Objektiv 4 und dem Objektträger 3 eine Immersionsflüssigkeit I eingebracht. Diese kann mittels einer (nicht gezeigten) Immersionsflüssigkeitseinrichtung eingebracht und nach dem Erfassen des Kamerabildes wieder abgesaugt werden.

Optional kann die Immersionsflüssigkeitseinrichtung auch dazu ausgebildet sein, zwischen dem Kondensor und dem Objektträger 3 eine Immersionsflüssigkeit einzubringen und nach dem Erfassen des Kamerabildes abzusaugen, wobei die Immersionsflüssigkeit gleich oder unterschiedlich zur Immersionsflüssigkeit I zwischen Objektiv 4 und Objektträger 3 gewählt sein kann.

Anschließend wird der Objektträger 3 mit der Probe P durch die Verfahrvorrichtung 7 aus dem Strahlengang des Lichtstrahls L hinausbewegt und die Probe P kann vom Objektträger 3 entfernt werden.

Aufgrund der vorzugsweise großen numerischen Apertur des Objekts 4 kann weiter eine Ausrichteeinrichtung vorgesehen sein, welche den Objektträger 3 relativ zu einer optischen Achse A des Objektivs 4 ausrichtet.

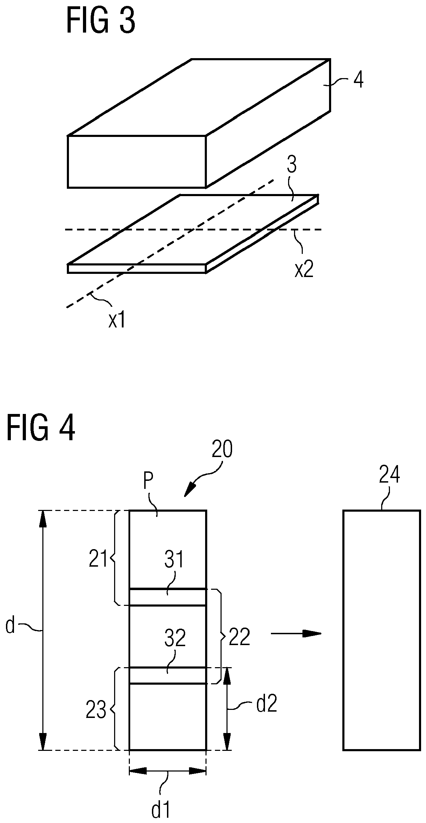

Wie in Figur 3 gezeigt, kann der Probenträger 3 hierzu vorzugsweise um eine erste Achse X1 und eine dazu senkrechte zweite Achse X2 verschwenkt werden. Dadurch kann eine genaue Fokussierung über das gesamte Gesichtsfeld erzielt werden. Dazu kann eine Sensorvorrichtung die genaue Ausrichtung des Objektträgers 3 relativ zur optischen Achse A des Objektivs messen und ein entsprechendes Messsignal an die Ausrichteeinrichtung übermitteln.

Wie in Figur 4 gezeigt, kann die Länge d der Probe P einem Vielfachen der Breite d1 der Probe entsprechen und kann im Wesentlichen beliebig groß sein. Die Breite des mittels des Kamerachips 4 erfassten Bereichs der Probe P ist vorzugsweise gleich groß wie die Breite d1 der Probe P. Durch Erfassen und Kombinieren mehrerer Kamerabilder 21 bis 23 kann durch die Auswerteeinrichtung 6 dadurch ein Gesamtbild 24 generiert werden, welches die gesamte Probe P abbildet. Die Überlappbereiche 31, 32 werden möglichst klein gewählt, vorzugsweise kleiner als 10 Prozent, besonders bevorzugt kleiner als 5 Prozent der Bildhöhe. Gemäß weiteren Ausführungsformen kann die Breite des abgebildeten Bereichs sogar größer sein als die Breite der untersuchten Probe P. Bei Verwendung eines rechteckigen und nicht quadratischen Kamerachips 4 ist der Kamerachip 4 bevorzugt derart ausgerichtet, dass die Breitenrichtung der Probe P parallel zur längeren Seite des rechteckigen Kamerachips 4 abgebildet wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

**1.** Optische Mikroskopiervorrichtung (1a; 1b) zum Erfassen zellulärer Komponenten einer Probe (P), mit:

einer Lichtquelleneinrichtung (2) zum Aussenden eines Lichtstrahls (L);

einem in einem Strahlengang des Lichtstrahls (L) anordenbaren Objektträger (3) zum Aufnehmen der Probe (P) ;

einem Objektiv (4), welches im Strahlengang des Lichtstrahls (L) hinter dem Objektträger (3) angeordnet ist; und

einem Kamerachip (5), welcher dazu ausgebildet ist, den Lichtstrahl (L) nach dem Durchgang durch das Objektiv (4) zu detektieren und ein Kamerabild (21, 22, 23) zu erzeugen,

**dadurch gekennzeichnet, dass** eine Sehfeldzahl im Zwischenbild hinter dem Objektiv (4) größer als 25 Millimeter ist.

2. Mikroskopiervorrichtung (1a; 1b) nach Anspruch 1, wobei der Kamerachip (5) dazu ausgebildet ist, das Zwischenbild hinter dem Objektiv (4) direkt zu erfassen.

3. Mikroskopiervorrichtung (1a; 1b) nach Anspruch 1 oder 2, wobei eine Gesamtvergrößerung der Mikroskopiervorrichtung (1a; 1b) einem Quotienten einer Abtastung in der Objektebene und einer Pixelgröße von Pixeln des Kamerachips entspricht, und wobei eine Auflösung der Mikroskopiervorrichtung (1a; 1b) mindestens doppelt so groß ist wie die Abtastung.

4. Mikroskopiervorrichtung (1a; 1b) nach einem der vorangehenden Ansprüche, wobei eine Gesamtvergrößerung der Mikroskopiervorrichtung (1a; 1b) mindestens doppelt so groß ist wie der Quotient aus Pixelgröße von Pixeln des Kamerachips (5) und Auflösung der Mikroskopiervorrichtung (1a; 1b) .

5. Mikroskopiervorrichtung (1a; 1b) nach einem der vorangehenden Ansprüche, wobei ein Abstand zwischen dem Objektträger (3) und dem Kamerachip (5) kleiner als 200 Millimeter ist.

6. Mikroskopiervorrichtung (1a; 1b) nach einem der vorangehenden Ansprüche, wobei eine numerische Apertur (NA_O) des Objektivs (4) in Luft größer als 0,5 ist, bevorzugt größer als 0,8.

7. Mikroskopiervorrichtung (1a; 1b) nach einem der vorangehenden Ansprüche, wobei die Pixel des Kamerachips (5) eine Pixelgröße von kleiner oder gleich 7,5 Mikrometern aufweisen, bevorzugt von kleiner oder gleich 5 Mikrometern, besonders bevorzugt von kleiner oder gleich 3 Mikrometern.

8. Mikroskopiervorrichtung (1a; 1b) nach einem der vorangehenden Ansprüche, wobei der Kamerachip (5) mindestens 30 Megapixel aufweist, bevorzugt mindestens 50 Megapixel.

9. Mikroskopiervorrichtung (1a; 1b) nach einem der vorangehenden Ansprüche, weiter mit einer Immersionsflüssigkeitseinrichtung, welche dazu ausgebildet ist, eine Immersionsflüssigkeit (I) zwischen den Objektträger (3) und das Objektiv (4) einzubringen und/oder abzusaugen.

10. Mikroskopiervorrichtung (1a; 1b) nach einem der vorangehenden Ansprüche, wobei das Objektiv (4) weiter asphärische optische Elemente und/oder computergenerierte Hologramme und/oder diffraktive optische Elemente zur optischen Abbildung und/oder Optimierung der Abbildungsgüte aufweist.

11. Mikroskopiervorrichtung (1a; 1b) nach einem der vorangehenden Ansprüche, weiter mit:

einer Verfahrvorrichtung (7), welche dazu ausgebildet ist, den Objektträger (3) entlang einer Bewegungsachse linear zu verfahren, wobei der Kamerachip (5) dazu ausgebildet ist, während des Verfahrens des Objektträgers (3) eine Vielzahl von Kamerabildern (21, 22, 23) zu generieren, und

einer Auswerteeinrichtung (6), welche dazu ausgebildet ist durch Kombinieren der generierten Kamerabilder (21, 22, 23) ein Gesamtbild (24) eines streifenförmigen Bereichs der zu untersuchenden Probe (P) zu erzeugen, wobei der streifenförmige Bereich eine Breite von mindestens einem halben Millimeter aufweist.

12. Mikroskopiervorrichtung (1a; 1b) nach Anspruch 11, weiter mit einer Aufbringeinrichtung (8), welche dazu ausgebildet ist, die zu untersuchende Probe (P) auf den Objektträger (3) aufzubringen, wobei die Verfahrvorrichtung (7) dazu ausgebildet ist, den Objektträger (3) mit der aufgebrachten Probe (P) in den Strahlengang des Lichtstrahls (L) einzubringen.

13. Mikroskopiervorrichtung (1a; 1b) nach Anspruch 12, weiter mit einer Einfärbeeinrichtung (9), welche dazu ausgebildet ist, die auf den Objektträger (3) aufgebrachte Probe (P) vor dem Einbringen in den Strahlengang des Lichtstrahls (L) einzufärben.

**14.** Mikroskopiervorrichtung (1a; 1b) nach einem der vorangehenden Ansprüche, mit im Strahlengang eingebrachten optischen Elementen, sodass die Mikroskopiervorrichtung (1) zur Differentialinterferenzkontrast-Mikroskopie ausgebildet ist.

**15.** Mikroskopiervorrichtung (1a; 1b) nach einem der vorangehenden Ansprüche, weiter mit einer Ausrichteeinrichtung, welche dazu ausgebildet ist, den Objektträger (3) relativ zu einer optischen Achse (A) und/oder einem Tiefenschärfebereich des Objektivs (4) auszurichten.

# FIG 1

# FIG 2

FIG 3

FIG 4

**Europäisches Patentamt**
**European Patent Office**
**Office européen des brevets**

# EUROPÄISCHER RECHERCHENBERICHT

**Nummer der Anmeldung**

EP 17 19 5143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JAGGI B ET AL: "DESIGN OF A SOLID-STATE MICROSCOPE", OPTICAL ENGINEERING, SOC. OF PHOTO-OPTICAL INSTRUMENTATION ENGINEERS, BELLINGHAM, Bd. 28, Nr. 6, 1. Juni 1989 (1989-06-01), Seiten 675-682, XP000026297, ISSN: 0091-3286 * das ganze Dokument * | 1-15 | INV. G02B21/00 G02B21/36 ADD. G01N1/28 |
| Y | Anonymous: "Sony Global - News Release - Sony Develops 35mm full size CMOS Image Sensor with 24.81 Effective Megapixel resol", , 30. Januar 2008 (2008-01-30), XP055461217, Gefunden im Internet: URL:https://www.sony.net/SonyInfo/News/Press/200801/08-010E/index.html [gefunden am 2018-03-20] * das ganze Dokument * | 1-15 | |
| X | DE 24 05 446 A1 (OLYMPUS OPTICAL CO) 29. August 1974 (1974-08-29) * das ganze Dokument * | 1 | RECHERCHIERTE SACHGEBIETE (IPC) G02B G01N |
| X | DE 10 2007 033793 A1 (CARL ZEISS IMAGING SOLUTIONS G [DE]) 22. Januar 2009 (2009-01-22) * das ganze Dokument * | 1-15 | |
| Y | DE 103 06 970 A1 (ZEISS CARL JENA GMBH [DE]) 2. September 2004 (2004-09-02) * das ganze Dokument * | 1-15 | |
| A | WO 01/27679 A1 (CELLAVISION AB [SE]; HEYDEN ANDERS [SE]; HAAKANSSON JOHAN [SE]; WALLIN) 19. April 2001 (2001-04-19) * Zusammenfassung; Abbildungen * | 1-15 | |

Der vorliegende Recherchenbericht wurde für alle Patentansprüche erstellt

| Recherchenort | Abschlußdatum der Recherche | Prüfer |
|---|---|---|
| München | 21. März 2018 | Windecker, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 5143

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2018

| Im Recherchenbericht angeführtes Patentdokument | Datum der Veröffentlichung | Mitglied(er) der Patentfamilie | Datum der Veröffentlichung |
|---|---|---|---|
| DE 2405446 A1 | 29-08-1974 | DE 2405446 A1 | 29-08-1974 |
| | | JP S5141356 B2 | 09-11-1976 |
| | | JP S49106840 A | 09-10-1974 |
| | | US 3879111 A | 22-04-1975 |
| DE 102007033793 A1 | 22-01-2009 | DE 102007033793 A1 | 22-01-2009 |
| | | EP 2130087 A1 | 09-12-2009 |
| | | US 2010194873 A1 | 05-08-2010 |
| | | WO 2009010115 A1 | 22-01-2009 |
| DE 10306970 A1 | 02-09-2004 | DE 10306970 A1 | 02-09-2004 |
| | | EP 1595403 A1 | 16-11-2005 |
| | | JP 2006520013 A | 31-08-2006 |
| | | US 2007121204 A1 | 31-05-2007 |
| | | WO 2004080076 A1 | 16-09-2004 |
| WO 0127679 A1 | 19-04-2001 | AU 1182401 A | 23-04-2001 |
| | | WO 0127679 A1 | 19-04-2001 |

EPO FORM P0461

Für nähere Einzelheiten zu diesem Anhang : siehe Amtsblatt des Europäischen Patentamts, Nr.12/82